# EUROPEAN PATENT APPLICATION

(11) **EP 2 903 343 A1**
(43) Date of publication of application: **05.08.2015**
(21) Application number: 14360001.3
(22) Date of filing: 31.01.2014
(51) Int. Cl.: H04W 36/20

(54) **A method for ul-dl decoupling, low power node, network and computer program product**

(71) Applicant: ALCATEL LUCENT, 92100 Boulogne-Billancourt (FR)
(72) Inventor: Puddle, Nicola, Swindon, Wiltshire SN5 7DJ (GB); Wong, Shin Horng, Swindon, Wiltshire SN5 7DJ (GB); Brend, Graham, Swindon, Wiltshire SN5 7DJ (GB)
(74) Representative: Lichota, Catherine Margaret Timmis

(57) **Abstract**

A method, in a heterogeneous telecommunications network, for triggering UL-DL decoupling for a user equipment (UE) device, including receiving a detection trigger signal at a low power node of the network, the signal including data representing UL transmission information for the UE device, detecting, for a predetermined period, whether the UE is within a coverage region of the low power node, and performing UL-DL decoupling for the UE device in the event that the UE is detected within the predetermined period.

## Description

### TECHNICAL HELD

The disclosed embodiments relate generally to wireless network communication, and, more particularly, to UL-DL decoupling in heterogeneous telecommunications networks.

### BACKGROUND

Typical homogeneous cellular systems employ a network of nodes or base stations (macro cells) in a predetermined arrangement. The base stations have similar transmit powers and antenna patterns, and so on.

Small cells are low power, low-cost, nodes or base stations that are able to provide increased network capacity for residential or enterprise environments. They have extensive auto-configuration and self-optimization capabilities to enable a simple plug and play deployment, and are designed to automatically integrate themselves into an existing macro cellular network. A network that has both small cells and macro cells deployed is referred to as a Heterogeneous network.

When deploying such low power nodes in macro networks, the transmit power difference between a low power node and a macro cell is, potentially, a source of issues. For example, as serving cell selection can be based on the downlink (DL) received signal strength, the transmit power of each cell will determine the area it covers as a serving cell. However, considering uplink (UL), the strength of the signal received at each node (small or macro) is not directly dependent on its DL transmit power. Therefore, the provision of low power nodes can potentially cause an UL-DL imbalance in the sense that cells other than the serving cell could receive a stronger signal from user equipment (UE) than the serving cell.

### SUMMARY

According to an example, there is provided a method, in a heterogeneous telecommunications network, for triggering UL-DL decoupling for a user equipment (UE) device, including receiving a detection trigger signal at a low power node of the network, the signal including data representing UL transmission information for the UE device, detecting, for a predetermined period, whether the UE is within a coverage region of the low power node, and performing UL-DL decoupling for the UE device in the event that the UE is detected within the predetermined period. The predetermined period can be triggered from the time of transmission of the detection trigger signal for the network, or by receipt of the detection trigger signal at the low power node. In the event that the UE is not detected within the predetermined period, the LPN can cease detection, and remove the data representing UL transmission information for the UE from the low power node, by deleting the data or reference to the data for example. A failure message can be transmitted from the low power node. A detection timer can be provided or used at the low power node to implement the predetermined period for detection. A detection timer can be provided or used at a network node to implement the predetermined period for detection.

According to an example, there is provided a low power node, in a heterogeneous telecommunications network, operable to receive a detection trigger signal including data representing UL transmission information for a UE device, detect, for a predetermined period, whether a UE is within a coverage region of the low power node, and trigger UL-DL decoupling for the UE device in the event that the UE is detected within the predetermined period. The node can be operable to detect for a predetermined period triggered from the time of transmission of the detection trigger signal for the network or from the time of receipt of the detection trigger signal at the low power node. The low power node can cease detection, and remove the data representing UL transmission information for the UE, such as in the event that the UE is not detected within the predetermined period. The low power node can be further operable to transmit a failure message to a node of the network, such as a macro node for example, which can be the macro node that transmitted the detection trigger signal. A detection timer to implement the predetermined period for detection can be provided. The timer can be provided at the low power node, or can be provided at another node of the network, such as the macro node that transmitted the detection trigger signal for example.

According to an example, there is provided a heterogeneous telecommunications network, including a node within the network operable to transmit a detection trigger signal including data representing UL transmission information for a UE device operating within the network, a low power node operable to detect, for a predetermined period of time, whether the UE is within a coverage region of the low power node, and perform UL-DL decoupling for the UE device in the event that the UE is detected within the predetermined period. The low power node can be operable to detect for a predetermined period triggered from the time of transmission of the detection trigger signal or from the time of receipt of the detection trigger signal at the low power node.

According to an example, there is provided a computer program product, comprising a computer usable medium having computer readable program code embodied therein, said computer readable program code adapted to be executed to implement a method, in a heterogeneous telecommunications network, for triggering UL-DL decoupling for a user equipment (UE) device as provided above.

### BRIEF DESCRIPTION OF THE DRAWINGS

Embodiments will now be described, by way of example only, with reference to the accompanying drawings, in which:
Figure 1 is a schematic representation of of a heterogeneous network deployment with a macro cell and a small cell; and
Figure 2 is a schematic representation of some interactions between an LPN and a network node according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

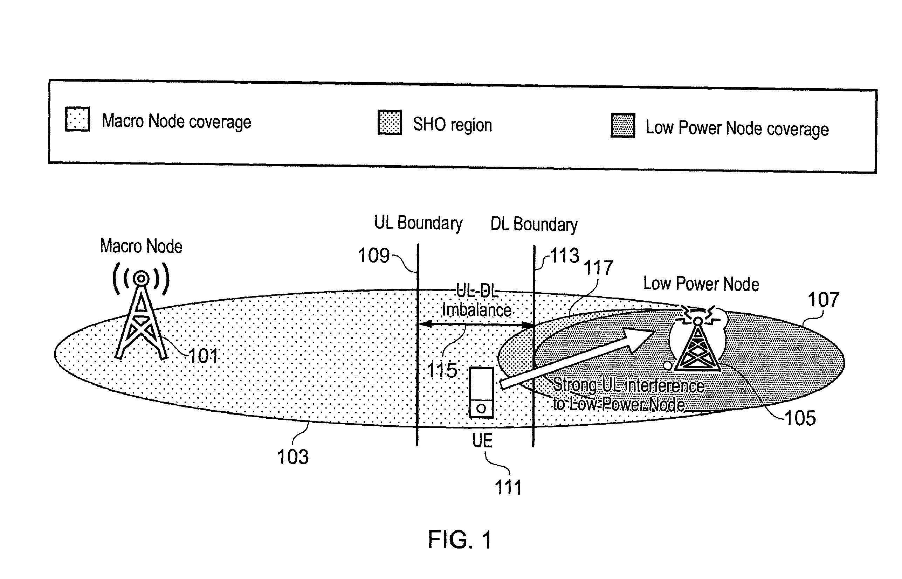

Figure 1 is a schematic representation of of a HetNet deployment with a macro cell and a small cell. A macro cell (or node) 101 serves a region 103, whilst a small or low power node 105 serves a region 107, which is within the boundaries of the region 103. An UL (uplink) boundary 109 is where a UE 111 uplink pathloss to the macro cell 101 and to the small cell 105 are the same. The DL (downlink) boundary 113 is where the received pilot power from the macro cell 101 and the received pilot power from the small cell 105 are the same at the UE 111.

This is different from a homogeneous network, where the UL and DL boundaries are at the same points in the network. However, in HetNet deployments, the small cell 105 has a lower transmit power than the macro cell 101. As a consequence of this, and as depicted in figure 1, the UL and DL boundaries 109, 113 are different. The region between the UL and DL boundaries is referred to as the UL-DL imbalance region 115.

A UE in the UL-DL imbalance region 115 that is connected to the macro cell 101 will create strong interference to the small cell 105. This scenario is applicable to both LTE and UMTS radio access technologies. In UMTS, the strong uplink interference will occur if this UE is not in the SHO (soft handover) region 117.

Given the difference in UL and DL boundaries in HetNet deployments, the uplink and downlink can be decoupled, whereby the uplink and downlink streams are served by different cells. For example, with reference to figure 1, the downlink can be served by the serving macro cell 101 whilst the uplink can be served by the small cell 105. Hence, instead of generating strong interference to the small cell, the small cell demodulates the UL signal for the UE 111.

An LPN can be provided with a UE's UL transmission details to enable the LPN to sync with the UE and measure the UE UL, which can provide an indication of decoupling criteria being met. A determination of when to trigger a decoupling can therefore be expedited.

According to an example, there is provided a method to allow an LPN to control the time taken to synchronise and measure a UE whenever it is provided with a UE's UL transmission information for the purposes of triggering a UL-DL decoupling procedure for said UE. That is, in a heterogeneous telecommunications network, a mechanism is provided for triggering UL-DL decoupling for a UE device, in which an LPN of the network receives a detection trigger signal which includes data representing UL transmission information for a UE device. The LPN is operable to detect, for a predetermined period of time, whether the UE is within a coverage region of the low power node, and can perform UL-DL decoupling for the UE device in the event that the UE is detected within that predetermined time period. The predetermined period of time can be triggered by reception of the detection trigger signal at the LPN, or can be triggered upon transmission of the same. The signal can be transmitted by a node within the network such as a macro node, macro eNB and so on depending on the architecture under consideration. That is, generally, a node of the network is operable to transmit a detection trigger signal, and that node can be one of a number of typical alternatives depending on the architecture of the wireless telecommunications network under consideration. Thus, the present invention is not intended to be limited to a particular type of node in the sense of the transmission of the detection trigger signal, and for example, in the case of LTE a macro eNB can be the node within the network that is operable to transmit such a signal for an LPN. Reference herein to RNC, node, macro node, macro eNB and so on is not intended to be limiting, and the terms can be used interchangeably.

The provision of such a mechanism on the LPN is desirable since it is possible that the LPN and radio network controller (RNC) (or macro node, Macro Node B and so on) are from different vendors for example, in which case it would be unrealistic to expect that the LPN has the capability to indefinitely try and detect a UE, hence having a mechanism that allows the LPN to make an autonomous decision on how long it can try and detect a UE based on, for example, the capacity of the LPN is desirable.

In an example, the LPN either supports, or is provided with, a detection timer. Only for the duration of a predetermined period of time of the detection timer will the LPN try to detect, that is, synchronise and measure a UE, for the purpose of triggering decoupling. If the LPN is unable to detect the UE within the period of the detection timer, the LPN will stop trying to detect the UE and can delete any UL information about said UE that was provided to it. In an example, a detection timer can be a hardware or software mechanism for implementing a detection period. The timer can be provided at an LPN and triggered by reception of the detection trigger signal at the LPN or in the case that the detection timer is implemented or provided at a node within the network that is operable to transmit the detection trigger signal, the timer can be triggered upon transmission of the detection trigger signal. Alternatively, a timer at an LPN can be triggered upon receipt of the detection trigger signal but the predetermined period can be decreased by a period of time commensurate with the time delay that occurs to account for the period between transmission and reception of the detection trigger signal.

In an example, if an LPN is unable to detect a UE within the time period of the detection timer it can provide an indication with an appropriate failure/termination cause to an RNC (and/or Macro Node B) that originally sent the LPN the UE's UL information. Such an indication can then be used by the RNC (and/or Macro Node B) to determine that, for example, the UE may not be roaming towards said LPN any longer, and hence that UL-DL decoupling towards said LPN may not be required.

In an example, an RNC (or Macro Node B) can start a detection timer instead of the LPN when it sends the UE's UL information to the LPN. Hence, if the RNC (or Macro Node B) does not receive an indication from the LPN that it has detected the UE before the time period of the detection timer expires, the RNC (or Macro Node B) assumes that UL-DL decoupling towards said LPN may not be required. In this case the RNC can send a new message to the LPN to indicate that it should stop attempting to detect the UE and can discard the previously sent UE's UL information.

According to an example, once an LPN is able to detect and monitor a UE, additional features can be provided. For example, the LPN can provide the RNC (and/or macro node/NodeB) with periodical reports on measurements taken by the LPN of the UE's UL so that the RNC (or macro node/NodeB) can make a decision on when and whether the decoupling criteria for the UE has been or is met and thus the RNC (or macro Node B) can trigger the UL-DL decoupling procedure.

The LPN can indicate to the RNC (and/or macro node/NodeB) in the periodic reports how long it will try and detect the UE for. This can, for example, be used in the case when the LPN is configured with a detection timer (rather than where one is provided at an the RNC/node and so on) and hence would allow the node to send a new duration timer to the LPN if the node determined that it needed the LPN to try and detect the UE for a duration that is longer than it is currently or otherwise intending to.

The node can provide the LPN with a decouple threshold, so that once the LPN determines that the quality of the UE's UL transmissions reaches, or is better than, the threshold, the LPN can then send a notification to the node that the threshold is met/exceeded. This therefore allows the node to trigger UL-DL decoupling for the UE. In case that the LPN is unable to detect the UE, or the threshold has not been exceeded an indication can be sent to the node to advise of a termination or failure, with an appropriate failure/termination cause value for example.

When the LPN is implemented with an Iuh architecture, the LPN can be supported by a Small Cell gateway. Hence, in this scenario, additional functionality can be introduced on the Small Cell gateway, such that the gateway will forward any messages containing a UE's UL information from an RNC to the indicated destination LPN via an Iurh interface and similarly can forward any response messages from the LPN to the source RNC via an Iur interface. Messages used to exchange information about a UE's UL can include an identifier of the destination LPN, or an identifier of the destination RNC such that the small cell gateway can route the received message appropriately.

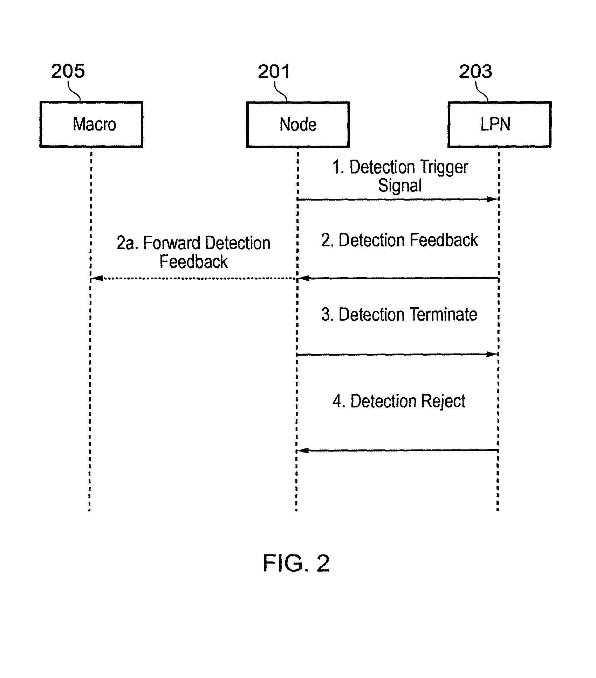

Figure 2 is a schematic representation of some interactions between an LPN and a node according to an example. As noted above, the node can be an RNC, macro node, macro eNB and so on.

When the node 201 wishes the LPN 203 to monitor a UE's UL it sends a detection trigger signal, 1, to the LPN 203 including the UE's UL Information, with an optional detection duration timer. If the LPN 203 detects and is able to monitor the UE's UL it periodically sends a Detection Feedback message, 2, to the source node 201, such message including measurement information of the UE's UL. In this case the node 201 can forward a Detection feedback message, 2a, to the macro cell 205 serving the UE (if required, to indicate that decoupling threshold has been reached/exceeded for example). This therefore enables the macro cell to determine when and whether to trigger a UL-DL decouple of the UE.

In the event of failure or abnormal conditions the node 201 can send a Detection Terminate message, 3, to the LPN 203 to allow the node 201 to stop the measurement of the UE's UL at the LPN 203. This could be, for instance, if the detection timer was not sent in message 1, but was supported on the node 201 instead of the LPN 203. In an example, the LPN 203 can send a Detection Reject message, 4, to the node 201, to allow the LPN 203 to report (using an appropriate cause value) that it cannot detect a UE.

A Detection feedback message, 2, can also provide a duration timer to the node 201 from LPN 203 to inform the node 201 how long LPN 203 will try to detect and measure a UE for. As an alternative to a Detection reject message, 4, if the LPN 203 is unable to detect a UE, an empty/NULL Feedback report can be sent from LPN 203 to node 201 as part of a Detection feedback message, 2.

Examples described so far illustrate the invention with reference to network nodes typically deployed in an UMTS (3G) wireless network. However it will be appreciated that the invention is also applicable to other wireless network architectures, for example the LTE (4G) wireless network. In such a deployment messages can be exchanged between a macro eNB and the LPN. Further if a Gateway is deployed in the LTE network to support communications between a macro eNB and LPN, said Gateway can forward messages from one node to the other (Macro eNB to LPN, or LPN to Macro eNB) via an X2 interface, which can be established between the Macro eNB and Gateway and between the Gateway and LPN. If the LPN is implemented with an Iuh architecture, messages sent between LPN 203 and RNC 201 can be transferred via a small cell gateway, for example over the Iurh and lur.

The present inventions can be embodied in other specific apparatus and/or methods. The described embodiments are to be considered in all respects as illustrative and not restrictive. In particular, the scope of the invention is indicated by the appended claims rather than by the description and figures herein. All changes that come within the meaning and range of equivalency of the claims are to be embraced within their scope.

## Claims

1. A method, in a heterogeneous telecommunications network, for triggering UL-DL decoupling for a user equipment (UE) device, including:
receiving a detection trigger signal at a low power node of the network, the signal including data representing UL transmission information for the UE device;
detecting, for a predetermined period, whether the UE is within a coverage region of the low power node; and
performing UL-DL decoupling for the UE device in the event that the UE is detected within the predetermined period.

2. A method as claimed in claim 1, wherein the predetermined period is triggered from the time of transmission of the detection trigger signal for the network.

3. A method as claimed in claim 1, wherein the predetermined period is triggered by receipt of the detection trigger signal at the low power node.

4. A method as claimed in any preceding claim, wherein, in the event that the UE is not detected within the predetermined period:
ceasing detection;
removing the data representing UL transmission information for the UE from the low power node.

5. A method as claimed in claim 4, further including transmitting a failure message from the low power node.

6. A method as claimed in claim 3, wherein a detection timer at the low power node is used to implement the predetermined period for detection.

7. A method as claimed in claim 2, wherein a detection timer at a network node is used to implement the predetermined period for detection.

8. A low power node, in a heterogeneous telecommunications network, operable to:
receive a detection trigger signal including data representing UL transmission information for a UE device;
detect, for a predetermined period, whether a UE is within a coverage region of the low power node; and
trigger UL-DL decoupling for the UE device in the event that the UE is detected within the predetermined period.

9. A low power node, as claimed in claim 8, wherein the node is operable to detect for a predetermined period triggered from the time of transmission of the detection trigger signal for the network or from the time of receipt of the detection trigger signal at the low power node.

10. A low power node as claimed in claim 8 or 9, operable to:
cease detection; and
remove the data representing UL transmission information for the UE.

11. A low power node as claimed in claim 10, further operable to transmit a failure message to a node of the network.

12. A low power node as claimed in any of claims 8 to 11, further including a detection timer to implement the predetermined period for detection.

13. A heterogeneous telecommunications network, including:
a node within the network operable to transmit a detection trigger signal including data representing UL transmission information for a UE device operating within the network;
a low power node operable to detect, for a predetermined period of time, whether the UE is within a coverage region of the low power node; and
perform UL-DL decoupling for the UE device in the event that the UE is detected within the predetermined period.

14. A heterogeneous telecommunications network as claimed in claim 13, wherein the low power node is operable to detect for a predetermined period triggered from the time of transmission of the detection trigger signal or from the time of receipt of the detection trigger signal at the low power node.

15. A computer program product, comprising a computer usable medium having computer readable program code embodied therein, said computer readable program code adapted to be executed to implement a method, in a heterogeneous telecommunications network, for triggering UL-DL decoupling for a user equipment (UE) device as claimed in any of claims 1 to 7.

## Amended claims

### Amended claims in accordance with Rule 137(2) EPC.

1. A method, in a heterogeneous telecommunications network, for triggering UL-DL decoupling for a user equipment (UE) device (111), including:
receiving, from a network node, a detection trigger signal at a low power node (105; 203) of the network, the signal including data representing UL transmission information for the UE device (111);
detecting, for a predetermined period, whether the UE (111) is within a coverage region of the low power node (105; 203); and
performing UL-DL decoupling for the UE device (111) in the event that the UE is detected within the predetermined period.

2. A method as claimed in claim 1, wherein the predetermined period is triggered from the time of transmission of the detection trigger signal for the network.

3. A method as claimed in claim 1, wherein the predetermined period is triggered by receipt of the detection trigger signal at the low power node (105; 203).

4. A method as claimed in any preceding claim, wherein, in the event that the UE (111) is not detected within the predetermined period:
ceasing detection;
removing the data representing UL transmission information for the UE from the low power node (105; 203).

5. A method as claimed in claim 4, further including transmitting a failure message from the low power node (105; 203).

6. A method as claimed in claim 3, wherein a detection timer at the low power node (105; 203) is used to implement the predetermined period for detection.

7. A method as claimed in claim 2, wherein a detection timer at a network node is used to implement the predetermined period for detection.

8. A low power node (105; 203), in a heterogeneous telecommunications network, operable to:
receive, from a network node, a detection trigger signal including data representing UL transmission information for a UE device (111);
detect, for a predetermined period, whether a UE (111) is within a coverage region of the low power node (105; 203); and
trigger UL-DL decoupling for the UE device (111) in the event that the UE is detected within the predetermined period.

9. A low power node (105; 203), as claimed in claim 8, wherein the node is operable to detect for a predetermined period triggered from the time of transmission of the detection trigger signal for the network or from the time of receipt of the detection trigger signal at the low power node.

10. A low power node (105; 203) as claimed in claim 8 or 9, operable to:
cease detection; and
remove the data representing UL transmission information for the UE.

11. A low power node as claimed in claim 10, further operable to transmit a failure message to a node of the network.

12. A low power node (105; 203) as claimed in any of claims 8 to 11, further including a detection timer to implement the predetermined period for detection.

13. A heterogeneous telecommunications network, including:
a node (201) within the network operable to transmit a detection trigger signal including data representing UL transmission information for a UE device (111) operating within the network;
a low power node (105; 203) operable to receive the detection trigger and detect, for a predetermined period of time, whether the UE is within a coverage region of the low power node; and
perform UL-DL decoupling for the UE device in the event that the UE is detected within the predetermined period.

14. A heterogeneous telecommunications network as claimed in claim 13, wherein the low power node (105; 203) is operable to detect for a predetermined period triggered from the time of transmission of the detection trigger signal or from the time of receipt of the detection trigger signal at the low power node.

15. A computer program product, comprising a computer usable medium having computer readable program code embodied therein, said computer readable program code adapted to be executed to implement a method, in a heterogeneous telecommunications network, for triggering UL-DL decoupling for a user equipment (UE) device (111) as claimed in any of claims 1 to 7.
